# DEMANDE DE BREVET EUROPEEN

(11) **EP 3 095 350 A1**
(43) Date de publication de la demande: **23.11.2016**
(21) Numéro de dépôt: 16167957.6
(22) Date de dépôt: 02.05.2016
(51) Int. Cl.: A47B 13/00, E04B 2/74, F16B 12/34, A47B 1/08

(54) **DISPOSITIF D'ACCROCHAGE D'UN PANNEAU A UNE STRUCTURE PORTEUSE**

(30) Priorité: 21.05.2015 FR 1554584
(71) Demandeur: Paperflow, 59110 La Madeleine (FR)
(72) Inventeur: COUSIN, Benoît, 78770 Auteuil le Roy (FR)
(74) Mandataire: Decorchemont, Audrey Véronique Christèle

(57) **Abrégé**

L'invention concerne un dispositif d'accrochage d'un panneau (3) à une structure porteuse comprenant un mât (10, 11) qui comporte une rainure (19) qui s'étend selon une première direction (X) et qui est munie d'une portion élargie formant un logement de positionnement et un orifice (22) s'étendant à travers le mât selon une deuxième direction (Y) perpendiculaire à la première direction pour traverser la rainure, le dispositif d'accrochage comportant au moins un pion de serrage (25) reçu dans la portion non élargie de la rainure, et un organe de fixation du panneau à la structure porteuse qui s'étend dans l'orifice pour recevoir le pion de serrage et limiter un mouvement du pion de serrage dans la rainure selon la première direction.

L'invention concerne également une table, une cloison ou un ensemble mural comprenant un tel dispositif d'accrochage, un kit permettant de monter un tel dispositif d'accrochage ainsi qu'un procédé de montage d'un tel dispositif d'accrochage.

## Description

La présente invention concerne un dispositif d'accrochage d'un panneau à une structure porteuse. L'invention concerne également une table, une cloison et un ensemble mural comprenant un tel dispositif d'accrochage, un kit pour monter un tel dispositif d'accrochage et un procédé de montage d'un tel dispositif d'accrochage.

### ARRIERE PLAN DE L'INVENTION

Il est à présent bien connu de livrer une table en kit que l'utilisateur n'a plus qu'à assembler chez lui, avec d'un côté la structure porteuse éventuellement en plusieurs éléments séparés et de l'autre le panneau destiné à former la surface plane de la table.

Toutefois, le montage est généralement délicat et fastidieux et requiert l'utilisation d'outils de vissage et/ou de serrage et le plus souvent l'intervention de deux personnes. En particulier, la solidarisation du panneau à la structure porteuse de la table s'avère être une étape complexe du fait qu'il n'est pas toujours aisé de manoeuvrer le panneau pour le placer correctement vis-à-vis de la structure porteuse avant de les solidariser ensemble par vissage ou serrage.

### OBJET DE L'INVENTION

Un but de l'invention est de proposer un dispositif d'accrochage d'un panneau à une structure porteuse qui permet de faciliter la solidarisation du panneau à la structure porteuse. Un but de l'invention est également de proposer une table, une cloison et un ensemble mural comportant un tel dispositif d'accrochage, un kit pour monter un tel dispositif d'accrochage ainsi qu'un procédé de montage d'un tel dispositif d'accrochage.

### DEFINITION GENERALE DE L'INVENTION

En vue de la réalisation de ce but, on propose un dispositif d'accrochage d'au moins un panneau à une structure porteuse, la structure porteuse comprenant au moins un mât qui comporte au moins une rainure qui s'étend selon une première direction et qui est munie d'une portion élargie formant un logement de positionnement, le mât comportant en outre au moins un orifice de fixation s'étendant à travers le mât selon une deuxième direction perpendiculaire à la première direction pour traverser au moins en partie la rainure, le dispositif d'accrochage comportant au moins :
- un organe d'attache du panneau à la structure porteuse qui est solidaire du panneau et qui comporte un pion de serrage reçu dans la portion non élargie de la rainure, et
- un organe de fixation du panneau à la structure porteuse qui s'étend dans l'orifice de fixation pour recevoir le pion de serrage et limiter un mouvement du pion de serrage dans la rainure selon la première direction.

Ainsi, un utilisateur n'a qu'à simplement poser le panneau sur la structure porteuse de sorte que le pion de serrage s'insère dans la partie élargie de la rainure et pousser le panneau relativement à la structure porteuse de sorte que le pion de serrage s'avance dans la partie non élargie de la rainure. Puis, l'utilisateur vient rapporter l'organe de fixation dans l'orifice pour bloquer en position le pion de serrage dans la partie non élargie de la rainure. De la sorte, le pion de serrage, et donc le panneau, s'avère bloqué en translation le long de la première direction par l'organe de fixation et bloqué en translation le long de la deuxième direction et d'une troisième direction, perpendiculaire à la première direction et la deuxième direction, par la coopération du pion de serrage avec la partie non élargie de la rainure. L'organe de fixation et la coopération du pion de serrage avec la rainure empêchent en outre une rotation du pion de serrage, et donc du panneau, selon l'une des trois directions.

L'invention permet donc un montage simplifié du panneau sur la structure porteuse par une seule personne, sans requérir l'utilisation d'outils particuliers comme de vissage ou de serrage. Par ailleurs, non seulement le montage du panneau sur la structure porteuse s'avère simple mais en outre il offre une bonne solidarisation du panneau à la structure porteuse

L'invention concerne également une table comportant un dispositif d'accrochage tel que précédemment décrit.

L'invention concerne également une cloison ou un ensemble mural comportant un dispositif d'accrochage comportant un dispositif d'accrochage tel que précédemment décrit.

Pour la présente demande, il convient d'entendre le terme « table » dans sa définition la plus large soit un meuble comprenant une surface plane sur laquelle des objets peuvent être posés. La table selon l'invention peut donc tout aussi bien être une console, un bureau, une table à manger, un guéridon, une table basse ...

Bien entendu, dans la présente demande les termes « supérieur », « inférieur », « horizontal », « vertical » ... doivent s'entendre selon le sens d'utilisation de la table, du meuble, de la cloison, de l'ensemble mural ... comprenant le dispositif d'accrochage de l'invention. Dans le cas d'une table, le sens d'utilisation est donc celui dans lequel la structure porteuse repose sur le sol et que le panneau s'étend pour présenter une surface plane sur laquelle des objets peuvent être posés.

L'invention concerne également un kit pour le montage d'un dispositif d'accrochage tel que précédemment décrit, le kit comportant de façon séparée au moins l'organe d'attache et l'organe de fixation du panneau à la structure porteuse.

L'invention concerne également un procédé de montage d'un dispositif d'accrochage tel que précédemment décrit comportant les étapes de :
- agencer le panneau sur la structure porteuse de sorte que le pion de serrage se trouve inséré dans le logement de positionnement,
- déplacer le panneau selon la première direction pour agencer le pion de serrage dans la partie non élargie de la rainure, et
- rapporter l'organe de fixation dans l'orifice pour bloquer en position le pion de serrage dans la rainure au niveau de la partie non élargie de la rainure.

D'autres caractéristiques et avantages de l'invention apparaîtront plus clairement à la lumière de la description qui va suivre et des dessins annexés, concernant des modes particuliers de réalisation de l'invention.

### BREVE DESCRIPTION DES DESSINS

Il sera fait référence aux figures des dessins annexés, où :
- la figure 1 est une vue en perspective d'une table comportant un dispositif d'accrochage selon un premier mode de réalisation particulier de l'invention ;
- les figures 2, 3, 4 et 5 illustrent différentes étapes successives de montage de la structure porteuse de la table représentée à la figure 1 ;
- la figure 6 est vue en perspective après montage de la structure porteuse de la table représentée à la figure 1 ;
- la figure 7 est une vue en perspective de l'un des panneaux de la table représentée à la figure 1 ;
- la figure 8 est une vue agrandie de l'un des pions de serrage du panneau représenté à la figure 7 ;
- la figure 9 est une vue agrandie de l'une des rainures de la structure porteuse illustrée à la figure 6 ;
- la figure 10 illustre l'étape de montage du panneau représenté à la figure 7 sur la structure porteuse illustrée à la figure 6 ;
- la figure 11 illustre l'étape de montage du dernier panneau de la table sur la structure porteuse illustrée à la figure 6;
- la figure 12 est une vue en perspective d'un organe de fixation de la table représentée à la figure 1 ;
- la figure 13 est une vue agrandie de l'un des orifices de fixation de la structure porteuse destinée à recevoir l'organe de fixation illustré à la figure 12 ;
- la figure 14 représente une étape de montage de l'organe de fixation illustré à la figure 12,
- la figure 15 est une vue schématique d'un ensemble mural comportant un dispositif d'accrochage selon un deuxième mode de réalisation particulier de l'invention, un des panneaux étant déjà fixé à la structure porteuse et l'autre des panneaux étant apte à être fixé à la structure porteuse.

### DESCRIPTION DETAILLEE D'UN MODE DE REALISATION PARTICULIER

### DE L'INVENTION

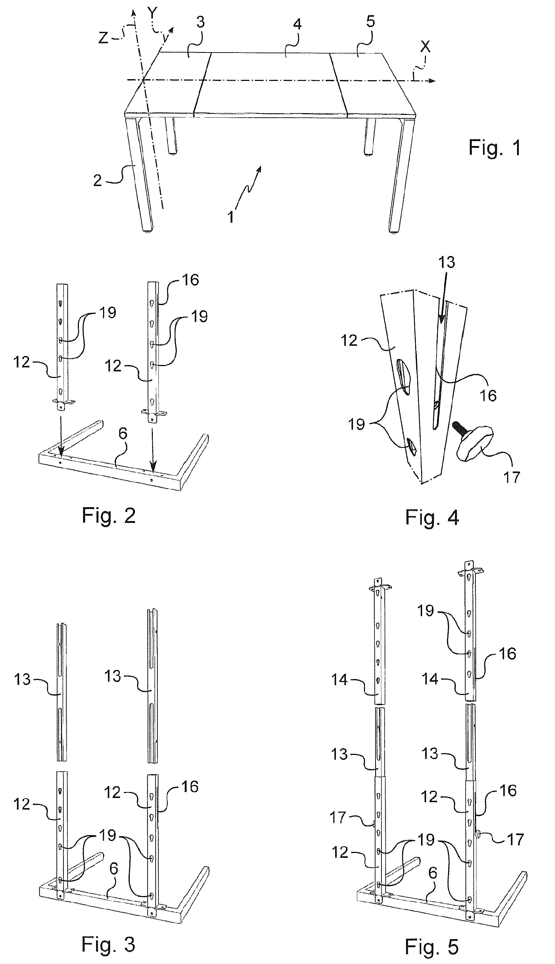

Sur la figure 1, on distingue une table portant la référence générale 1 qui comporte un dispositif d'accrochage selon un premier mode de réalisation de l'invention. Le dispositif d'accrochage, et donc la table 1, comporte ici une structure porteuse 2 et trois panneaux rapportés et solidarisés à la structure porteuse 2 à savoir un premier panneau d'extrémité 3, un panneau central 4 et un deuxième panneau d'extrémité 5, les deux panneaux d'extrémités 3, 5 étant de dimensions inférieures à celles du panneau central 4. La table 1 est par exemple en matière plastique.

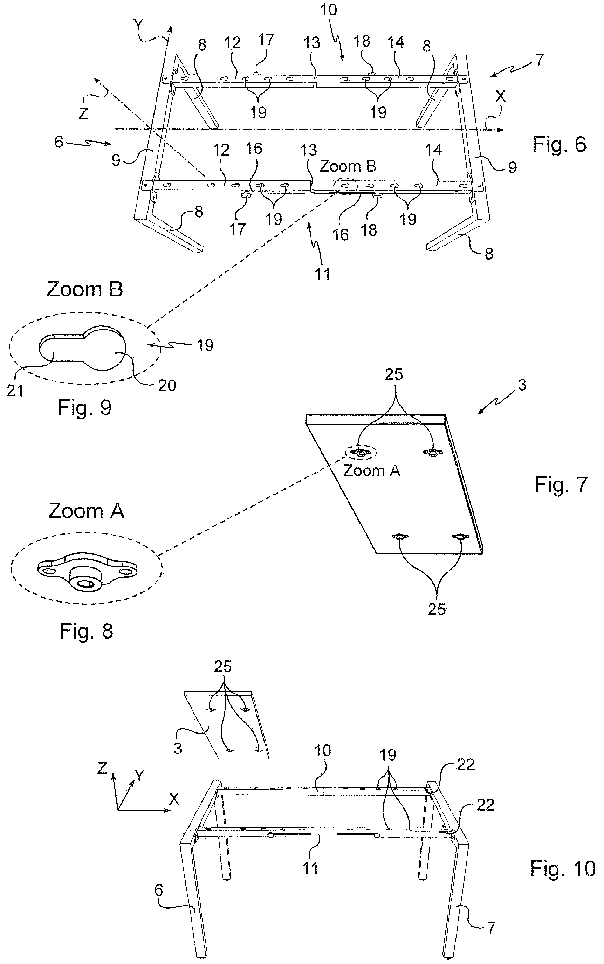

En référence à la figure 6, la structure porteuse 2 comporte un premier piètement 6 et un deuxième piètement 7. Chaque piètement 6, 7 est conformé en U de sorte à présenter deux pieds 8 venant reposer sur le sol et une barre transversale 9 s'étendant entre les deux pieds 8 associés pour les solidariser entre eux, la barre transversale 9 étant venue de matière avec les deux pieds 8. La structure porteuse 2 comporte par ailleurs un premier mât 10 et un deuxième mât 11 s'étendant horizontalement entre les deux piètements 6, 7. Plus précisément ici, les deux mâts 10, 11 sont agencés entre les deux piètements 6, 7 de sorte à s'étendre parallèlement l'un par rapport à l'autre et à une première direction X. Les deux mâts 10, 11 sont solidarisés chacun à leurs deux extrémités aux piètements 6, 7 par des moyens classiques d'attache comme par exemple des moyens de vissage ou de serrage.

De la sorte, une fois posée sur le sol, la structure porteuse 2 présente quatre pieds s'étendant verticalement selon une deuxième direction Z et une plateforme de support formée par les deux barres transversales 9 et les deux mâts 10, 11, la plateforme de support s'étendant dans un plan horizontal ayant pour normale la deuxième direction Z.

Les mâts 10, 11 vont être à présent détaillés. Les deux mâts 10, 11 étant ici identiques, l'un seul des deux mâts va être à présent décrit, la description s'appliquant évidemment à l'autre mât.

Comme plus visible aux figures 2 à 6, chaque mât de la structure porteuse 2 est constitué de tronçons creux, ici au nombre de trois, emboîtés les uns dans les autres : un premier tronçon d'extrémité 12 raccordé au premier piètement 6, un tronçon central 13 et un deuxième tronçon d'extrémité 14 raccordé au deuxième piètement 7. Les différents tronçons sont conformés de sorte que, d'une part, le tronçon central 13 puisse être translaté à l'intérieur du premier tronçon d'extrémité 12 relativement au premier tronçon d'extrémité 12 et, d'autre part, que le tronçon central 13 puisse être translaté à l'intérieur du deuxième tronçon d'extrémité 14 relativement au deuxième tronçon d'extrémité 14.

Le premier tronçon d'extrémité 12, le deuxième tronçon d'extrémité 14 et le tronçon central 13 sont ici conformés de sorte que le tronçon central 13 puisse être solidarisé aux deux autres tronçons d'extrémité 12, 14 selon trois positions relatives différentes. Ainsi, la table 1 peut être montée de sorte à présenter jusqu'à trois longueurs différentes (longueur prise selon la première direction X). De façon particulière, pour les différentes longueurs de table 1, les deux panneaux d'extrémités 12, 14 demeurent les mêmes alors que le panneau central 13 est changé. On agence ainsi un panneau central 13 de dimensions différentes sur la structure porteuse 2 selon la longueur de table 1 définie par la structure porteuse 2.

Les deux tronçons d'extrémités 12, 14 présentent donc chacun sur leur face longitudinale externe (c'est-à-dire leur face s'étendant selon la première direction X et tournée vers l'extérieur de la plateforme de support en direction opposée de l'autre mât) une rainure 16. Le tronçon central 13 présente sur sa face correspondante deux orifices d'accroche agencés de sorte qu'un premier orifice d'accroche soit visible à travers la rainure 16 du premier tronçon d'extrémité 12 lorsque le tronçon central 13 est inséré dans le premier tronçon d'extrémité 12 et que le deuxième orifice d'accroche soit visible à travers la rainure 16 du deuxième tronçon d'extrémité 12 lorsque le tronçon central 13 est inséré dans le deuxième tronçon d'extrémité 12. Le mât est par ailleurs muni d'une première mollette de serrage 17 permettant de solidariser le tronçon central 13 au premier tronçon d'extrémité 12 en étant d'une part vissée dans le premier orifice d'accroche et d'autre part en venant prendre appui sur le premier tronçon d'extrémité 12 de part et d'autre de la rainure 16 correspondante. De même, le mât est muni d'une deuxième mollette de serrage 18 permettant de solidariser le tronçon central 13 au deuxième tronçon d'extrémité 14 en étant d'une part vissée dans le deuxième orifice d'accroche et d'autre part en venant prendre appui sur le deuxième tronçon d'extrémité 14 de part et d'autre de la rainure 16 correspondante.

Il s'avère donc simple et rapide pour un utilisateur de choisir sa longueur de table 1 et de bloquer les différents tronçons 12, 13, 14 entre eux pour obtenir la longueur ainsi choisie de la table 1. Ceci est en outre modifiable aisément puisqu'il suffit d'enlever les deux mollettes de serrage 16, 18, de modifier la position relative du tronçon central 13 par rapport aux deux tronçons d'extrémité 12, 14 et de repositionner les deux mollettes de serrage 16, 18 pour bloquer le tronçon central 13 relativement aux deux tronçons d'extrémité 12, 14 dans sa nouvelle position relative pour obtenir la nouvelle longueur de table 1.

Comme plus visible à la figure 9, les deux tronçons d'extrémité 12, 14 présentent chacun sur leur face longitudinale supérieure (c'est-à-dire leur face s'étendant selon la première direction X, de normale la deuxième direction Z et tournée vers les différents panneaux 3, 4, 5) plusieurs rainures 19 (dont seule une partie est référencée sur les figures 2 à 6 et 10 à 11) qui s'étendent ici selon la première direction X.

Chaque rainure 19 présente une portion élargie 20 formant un logement de positionnement et une portion non élargie 21 prolongeant ledit logement de positionnement. Le rôle de ces rainures 19 est de permettre l'attache des panneaux 3, 4, 5 à la structure porteuse 2 comme nous le verrons plus loin. Chaque mât 10, 11 comporte ainsi au niveau de la première extrémité du premier tronçon d'extrémité 12 (c'est-à-dire l'extrémité du premier tronçon d'extrémité 12 solidarisée au premier piètement 6) deux rainures 19 pour la fixation du premier panneau d'extrémité 3 et au niveau de la deuxième extrémité du deuxième tronçon d'extrémité 14 (c'est-à-dire l'extrémité du deuxième tronçon d'extrémité 14 solidarisée au deuxième piètement 7) deux rainures 19 pour la fixation du deuxième panneau d'extrémité 5. Ici, du fait que la structure porteuse 2 peut présenter jusqu'à trois longueurs différentes, au niveau de sa deuxième extrémité, opposée à la première, le premier tronçon d'extrémité 12 comporte trois rainures 19 et au niveau de sa première extrémité, opposée à la deuxième, le deuxième tronçon d'extrémité 14 comporte trois rainures pour la fixation du panneau central 13 qui se trouve ainsi solidarisé à la structure porteuse 2 en étant à cheval sur les deux tronçons d'extrémité 12, 14. De la sorte, les deux tronçons d'extrémité 12, 14 peuvent accueillir jusqu'à trois tailles différentes de panneau central 13 selon la longueur sélectionnée de la table 1.

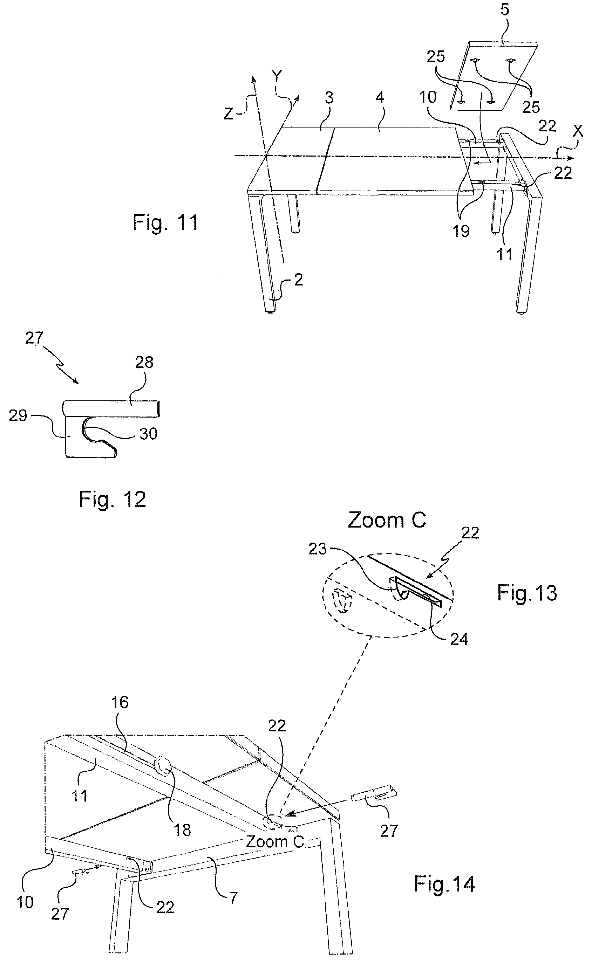

Par ailleurs, comme plus visible à la figure 13, chaque mât comporte au niveau de la deuxième extrémité de son deuxième tronçon d'extrémité 14, un orifice de fixation 22 s'étendant à travers le deuxième tronçon d'extrémité 14 parallèlement à une troisième direction Y perpendiculaire à la première direction X et à la deuxième direction Z. L'orifice de fixation 22 est ici ménagé de sorte à s'étendre à travers la rainure 19 du deuxième tronçon d'extrémité 14 la plus proche du deuxième piètement 7. Cet orifice de fixation 22 permet de fixer les différents panneaux 3, 4, 5 à la structure porteuse 2 comme nous le verrons plus loin.

L'orifice de fixation 22 présente plus particulièrement ici une portion de section semi-circulaire 23 (section de normale la troisième direction Y) traversant entièrement le mât et une portion de section rectangulaire 24 (section de normale la troisième direction Y) connectée à la portion de section semi-circulaire 23 et seulement présente au niveau de la face longitudinale externe du deuxième tronçon d'extrémité 14. La portion de section rectangulaire 24 débouche ainsi dans la rainure 19 mais ne traverse pas tout le mât. De la sorte, au niveau de sa face longitudinale externe, le deuxième tronçon d'extrémité 14 est percé par l'orifice de fixation 22 formé de sa portion de section semi-circulaire 23 et de la portion de section rectangulaire 24 et, au niveau de sa face longitudinale interne, opposée à sa face longitudinale externe, le deuxième tronçon d'extrémité 14 est percé par l'orifice de fixation 22 formé uniquement de sa portion de section semi-circulaire 23.

En référence à la figure 8, le premier panneau d'extrémité 3 va être à présent décrit mais cette description s'applique également au panneau central 4 et au deuxième panneau d'extrémité 5.

Le premier panneau d'extrémité 3 se présente sous la forme d'une pièce unitaire de section rectangulaire présentant une première face principale destinée à former une partie de la surface plane horizontale de la table 1 et une deuxième face principale, opposée à la première face principale, destinée à venir reposer sur la plateforme de support de la structure porteuse 2 pour solidariser le premier panneau d'extrémité 3 à la structure porteuse 2.

De la sorte, comme plus visible à la figure 7, la deuxième face principale comporte des organes d'attache, qui font partie du dispositif d'accrochage, à la structure porteuse 2. Les organes d'attache comportent des pions de serrage 25, ici au nombre de quatre, soit deux pions de serrage 25 pour une attache du premier panneau d'extrémité 3 au premier mât 10 et deux pions de serrage 25 pour une attache du premier panneau d'extrémité 3 au deuxième mât 11. Les différents pions de serrage 25 sont agencés dans la portion non élargie 21 des rainures 19 des mâts 10, 11 ce qui permet de très bien lier le premier panneau d'extrémité 3 à la structure porteuse 2. Le premier panneau d'extrémité 3 est en effet peu sujet à des mouvements parasites selon la deuxième direction Z et la troisième direction Y relativement à la structure porteuse 2 de par son attache en quatre points à la structure porteuse 2.

Par ailleurs, en référence aux figures 12 et 14, le dispositif d'accrochage, et donc la table 1, comporte des organes de fixation 27 des panneaux 3, 4, 5 à la structure porteuse 2, les organes de fixation 27 étant ici au nombre de deux.

Chaque organe de fixation 27 est identique et présente une tige d'accroche 28 insérée dans l'orifice de fixation 22 au niveau de sa portion de section semi-circulaire 23 et une partie d'arrêt 29, venue de matière avec la tige d'accroche 28, insérée dans l'orifice de fixation 22 au niveau de sa portion de section rectangulaire 24. La partie d'arrêt 29 est ici conformée grossièrement en L dont une aile est venue de matière avec la tige d'accroche 28 et une autre aile s'étend sensiblement parallèlement à la tige d'accroche 28, la jonction interne entre les deux ailes étant incurvée pour former un logement de réception 30 de l'un des pions de serrage 25. De la sorte, une fois l'organe de fixation 27 inséré dans l'orifice de fixation 22, la tige d'accroche 28 traverse tout le mât alors que la partie d'arrêt 29 vient reposer contre la surface interne de la face longitudinale interne du deuxième tronçon d'extrémité 14 en emprisonnant le pion de serrage 25 dans le logement de réception 30. On limite ainsi un mouvement du pion de serrage 25, et donc du panneau correspondant, selon la première direction X relativement à la structure porteuse 2.

Le montage de la table 1 qui vient d'être décrite va être à présent détaillé.

En référence aux figures 2 à 6, l'utilisateur commence par monter la structure porteuse 2. A cet effet, l'utilisateur solidarise déjà le premier tronçon d'extrémité 13 du premier mât 10 et le premier tronçon d'extrémité 13 du deuxième mât 11 au premier piètement 6 par les moyens d'attache. Puis, l'utilisateur emboîte chaque tronçon central 13 dans le premier tronçon d'extrémité 12 du mât correspondant en veillant à placer les orifices d'accroche en regard des rainures 16 correspondante. L'utilisateur vient alors placer les deux premières mollettes de serrage 17 pour bloquer chaque premier tronçon d'extrémité 12 dans le tronçon central 13 correspondant et faciliter ainsi le reste du montage de la structure porteuse 2.

L'utilisateur emboîte ensuite le deuxième tronçon d'extrémité 14 de chaque mât sur le tronçon central 13 correspondant en veillant une nouvelle fois à placer les orifices d'accroche en regard des rainures 16 des deuxièmes tronçons d'extrémités 14. Puis, l'utilisateur place les deux deuxièmes mollettes de serrage 18 pour bloquer chaque deuxième tronçon d'extrémité 14 dans le tronçon central 13 correspondant et faciliter ainsi le reste du montage de la structure porteuse 2.

Il reste alors à fixer le deuxième piètement 7 aux deuxièmes tronçons d'extrémités 14 pour achever le montage de la structure porteuse 2.

Une fois le montage de la structure porteuse 2 achevée, l'utilisateur peut éventuellement régler la longueur de la structure porteuse 2 en déplaçant les deux tronçons centraux 13 relativement aux quatre tronçons d'extrémités 12, 14 et en repositionnant les quatre mollettes de serrage 17, 18 correspondantes. A cet effet, pour une longueur minimale de la table 1, l'utilisateur rapproche au maximum les deux tronçons d'extrémité 12 et 14 d'un même mât entre eux de sorte que, pour chaque mât, le premier orifice d'accroche se trouve au niveau de l'extrémité de la rainure 16 du premier tronçon d'extrémité 12 la plus proche du premier piètement 6 et de sorte que le deuxième orifice d'accroche se trouve au niveau de l'extrémité de la rainure 16 du deuxième tronçon d'extrémité 14 la plus proche du deuxième piètement 7. Pour une longueur intermédiaire de table 1, pour chaque mât, l'utilisateur éloigne au maximum le tronçon central 13 de l'un des deux tronçons d'extrémité 12, 14 de sorte que, par exemple, le premier orifice d'accroche se trouve au niveau de l'extrémité de la rainure 16 du premier tronçon d'extrémité 12 la plus éloignée du premier piètement 6 et de sorte que le deuxième orifice d'accroche se trouve au niveau de l'extrémité de la rainure 16 du deuxième tronçon d'extrémité 14 la plus proche du deuxième piètement 7. Pour une longueur maximale de table 1, pour chaque mât, l'utilisateur éloigne au maximum le tronçon central 13 de l'autre des deux tronçons d'extrémité 12, 14 de sorte que, par exemple, le premier orifice d'accroche se trouve au niveau de l'extrémité de la rainure 16 du premier tronçon d'extrémité 12 la plus éloignée du premier piètement 6 et de sorte que le deuxième orifice d'accroche se trouve au niveau de l'extrémité de la rainure 16 du deuxième tronçon d'extrémité 14 la plus éloignée du deuxième piètement 7. On constate que les rainures 16 et les orifices d'accroche servent de repère à l'utilisateur qui peut ainsi plus aisément modifier la taille de la table 1.

En référence aux figures 7 à 11, l'utilisateur peut alors procéder au montage des panneaux 3, 4, 5. A cet effet, l'utilisateur vient positionner le premier panneau d'extrémité 3 au niveau des premiers tronçons d'extrémité 12 pour placer les quatre pions de serrage 25 dans les logements de positionnement correspondants puis l'utilisateur déplace longitudinalement selon la première direction X le premier panneau d'extrémité 3 en direction du premier piètement 6 pour déplacer les pions de serrage 25 dans les portions non élargies 21 des rainures. De la sorte, le premier panneau d'extrémité 3 se retrouve bloqué en translation selon la deuxième direction Z et la troisième direction Y. L'utilisateur procède ensuite de même pour le panneau central 13 et le deuxième panneau d'extrémité 14. De préférence, la table 1 est conformée de sorte que l'utilisateur déplace toujours dans le même sens les différents panneaux pour insérer les pions de serrage 25 dans les portions non élargies 21 des rainures 19 ce qui permet d'avoir les panneaux bien serrés entre eux.

En référence aux figures 12 à 14, l'utilisateur n'a plus qu'à rapporter les deux organes de fixation 27 au niveau des deuxièmes tronçons d'extrémités 14. A cet effet, pour chaque organe de fixation 27, l'utilisateur insère l'organe de fixation 27 dans l'orifice de fixation 22 associé de sorte que la tige d'accroche 28 traverse le mât et que la partie d'arrêt 29 vienne d'une part encercler le pion de serrage 25 introduit dans la rainure 19 correspondante et d'autre part prendre appui sur l'intérieur du deuxième tronçon d'extrémité 14. De la sorte, le deuxième panneau d'extrémité 5 est bloqué en translation selon la première direction X et, notamment du fait du serrage entre les différents panneaux selon la première direction X, ce blocage entraîne à son tour un blocage en translation selon la première direction X du premier panneau d'extrémité 3 et du panneau central 4.

En référence à la figure 4, la table 1 est ainsi totalement montée.

On constate donc que le montage de la table 1 s'avère particulièrement simple pour l'utilisateur. L'utilisateur peut ainsi monter seul la table 1 et n'a que très peu d'étapes nécessitant l'utilisation d'un outil particulier à savoir l'étape de solidarisation des mâts au premier piètement 6 et l'étape de solidarisation des mâts au deuxième piètement 7.

En outre, la table 1 présente une très bonne rigidité et une très bonne stabilité du fait notamment de la fixation en quatre points de chaque panneau 3, 4, 5 à la structure porteuse 2 plus du blocage par les deux organes de fixation 27.

Par ailleurs, mis à part pour le panneau central 4, les différents éléments de la table 1 sont identiques pour les différentes longueurs. Ceci permet d'avoir un grand nombre de pièces communes à la fabrication de tables de trois tailles différentes ce qui est avantageux non seulement en termes de fabrication et de logistique mais également en termes d'offres à l'utilisateur. En effet, l'utilisateur peut seulement commander un nouveau panneau central 4 s'il souhaite modifier la longueur de sa table 1.

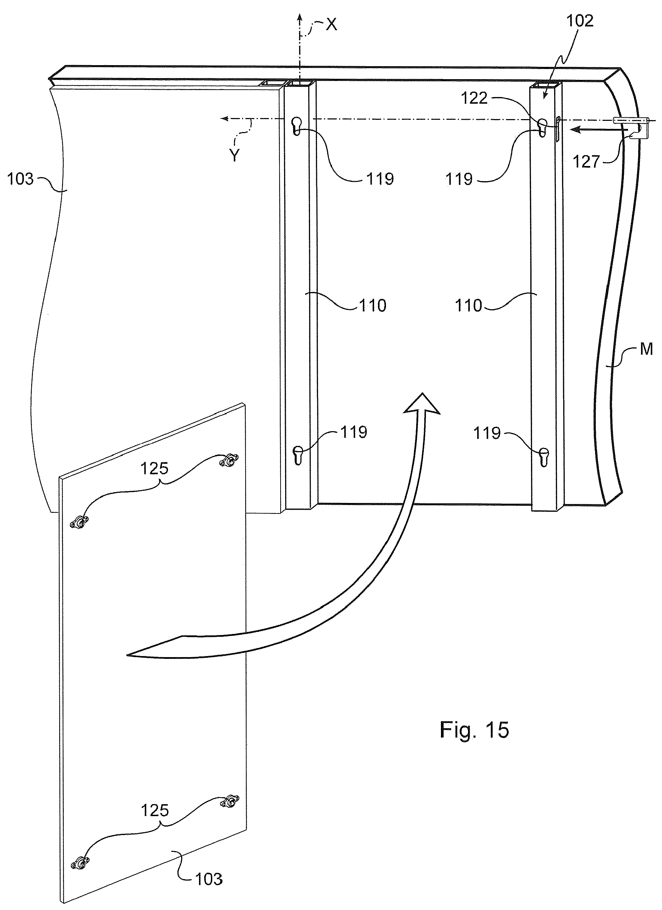

Sur la figure 15, on distingue un ensemble mural qui comporte un dispositif d'accrochage selon un deuxième mode de réalisation de l'invention. L'ensemble mural fait bien entendu référence à une structure décorative fixée à un mur M.

Le dispositif d'accrochage, et donc l'ensemble mural, comporte ici une structure porteuse 102 et une pluralité de panneaux 103 muraux rapportés et solidarisés à la structure porteuse 102.

La structure porteuse 102 comporte une pluralité de mâts 110 s'étendant verticalement. Les mâts 110 sont donc agencés de sorte à s'étendre parallèlement les uns par rapport aux autres et à une première direction X. Les mâts 110 sont solidarisés chacun au mur M par des moyens classiques d'attache comme par exemple des moyens de vissage ou de serrage.

Les mâts 110 présentent chacun sur leur face longitudinale principale (c'est-à-dire leur face opposée à celle venant reposer contre le mur M) deux rainures 119 qui s'étendent ici selon la première direction X.

Chaque rainure 119 présente une portion élargie formant un logement de positionnement et une portion non élargie prolongeant ledit logement de positionnement. Le rôle de ces rainures 119 est de permettre l'attache des panneaux 103 à la structure porteuse 102 comme nous le verrons plus loin.

Par ailleurs, un mât sur deux comporte au niveau de son extrémité supérieure un orifice de fixation 122 s'étendant à travers le mât 110 considéré parallèlement à une deuxième direction Y perpendiculaire à la première direction X. L'orifice de fixation 122 est ici ménagé de sorte à s'étendre à travers la rainure 119 la plus proche de l'extrémité supérieure du mât 110 considéré. Cet orifice de fixation 122 permet de fixer le panneau associé aux mâts 110 à la structure porteuse 2 comme nous le verrons plus loin. L'orifice de fixation 122 est par exemple identique à ceux du premier mode de réalisation.

En outre, chaque panneau 103 se présente sous la forme d'une pièce unitaire de section rectangulaire présentant une première face principale décorative et une deuxième face principale, opposée à la première face principale, destinée à venir reposer sur la structure porteuse 102 pour solidariser le panneau 103 à la structure porteuse 102.

De la sorte, la deuxième face principale comporte des organes d'attache, qui font partie du dispositif d'accrochage, à la structure porteuse 102. Les organes d'attache comportent des pions de serrage 125, ici au nombre de quatre, soit deux pions de serrage 125 pour une attache du panneau 103 à un premier mât 110 et deux pions de serrage 125 pour une attache du panneau 103 à un deuxième mât 110 consécutive au premier mât 110. Les différents pions de serrage 125 sont agencés dans la portion non élargie des rainures 119 des mâts 110 ce qui permet de très bien lier le panneau 103 à la structure porteuse 102.

Par ailleurs, le dispositif d'accrochage, et donc l'ensemble mural, comporte des organes de fixation 127 des panneaux 103 à la structure porteuse 102, les organes de fixation 127 étant ici au nombre de un pour chaque panneau 103. Les organes de fixation 127 sont par exemple identiques à ceux du premier mode de réalisation.

Le montage de l'ensemble mural qui vient d'être décrit va être à présent détaillé.

L'utilisateur commence par fixer la structure porteuse 102 sur le mur M.

Une fois le montage de la structure porteuse 102 achevée, l'utilisateur peut alors procéder au montage des panneaux.

A cet effet, l'utilisateur vient positionner chaque panneau 103 contre deux mâts consécutifs 110 pour placer les quatre pions de serrage 125 dans les logements de positionnement correspondants puis l'utilisateur déplace longitudinalement selon la première direction X le panneau 103 pour déplacer les pions de serrage 125 dans les portions non élargies des rainures. L'utilisateur n'a plus qu'à rapporter l'organe de fixation 127 au niveau de l'extrémité supérieure du deuxième mât 110 pour achever la fixation du panneau 103 à la structure porteuse 102.

L'utilisateur monte ainsi l'ensemble mural en fixant un par un chaque panneau 103 à la structure porteuse 102.

On constate donc que le montage de l'ensemble mural s'avère particulièrement simple pour l'utilisateur. L'utilisateur peut ainsi monter seul l'ensemble mural et n'a que très peu d'étapes nécessitant l'utilisation d'un outil particulier à savoir l'étape de solidarisation de la structure porteuse au mur.

En outre, l'ensemble mural présente une très bonne rigidité et une très bonne stabilité du fait notamment de la fixation en quatre points de chaque panneau 103 à la structure porteuse 102 plus du blocage par les deux organes de fixation 127. L'invention n'est pas limitée aux modes de réalisation particuliers qui viennent d'être décrits, mais englobe au contraire toute variante de réalisation entrant dans le cadre de l'invention.

En particulier, bien qu'ici on ait indiqué que le dispositif d'accrochage selon l'invention puisse faire partie d'une table ou d'un ensemble mural, le dispositif d'accrochage selon l'invention pourra être utilisé dans tout autre type d'application comme par exemple dans un meuble et ce que le panneau soit destiné à être agencé à l'horizontale ou à la verticale (par exemple pour une armoire, une bibliothèque) ou dans une cloison.

Par ailleurs, bien qu'ici le dispositif d'accrochage comporte trois panneaux, deux piètements et deux mâts, le dispositif d'accrochage pourra être composé d'un nombre différent d'éléments comme par exemple ne comporter qu'un seul panneau.

Bien qu'ici le dispositif d'accrochage comprenne deux organes de fixation pour les trois panneaux, on pourra envisager que le dispositif d'accrochage comporte deux organes de fixation par panneau (ce qui donnerait six organes de fixation pour l'exemple décrit) afin d'augmenter la rigidité du dispositif d'accrochage.

Bien qu'ici dans le mode de réalisation de l'ensemble mural, les mâts soient fixés au mur de sorte à s'étendre verticalement, les mâts pourront être fixés au mur de sorte à s'étendre horizontalement. De même les panneaux pourront être agencés horizontalement et non verticalement indépendamment de la position des mâts relativement au mur.

## Revendications

1. Dispositif d'accrochage d'au moins un panneau (3, 4, 5) à une structure porteuse (2), la structure porteuse (2) comprenant au moins un mât (10, 11) qui comporte au moins une rainure (19) qui s'étend selon une première direction (X) et qui est munie d'une portion élargie (20) formant un logement de positionnement, le mât comportant en outre au moins un orifice de fixation (22) s'étendant à travers le mât selon une deuxième direction (Y) perpendiculaire à la première direction pour traverser au moins en partie la rainure, le dispositif d'accrochage comportant au moins :
- un organe d'attache du panneau à la structure porteuse qui est solidaire du panneau et qui comporte un pion de serrage (25) reçu dans la portion non élargie (21) de la rainure, et
- un organe de fixation (27) du panneau à la structure porteuse qui s'étend dans l'orifice de fixation pour recevoir le pion de serrage et limiter un mouvement du pion de serrage dans la rainure selon la première direction.

2. Dispositif selon la revendication 1, dans lequel le mât (10, 11) est constitué de tronçons (12, 13, 14) creux emboîtés les uns dans les autres et conformés pour pouvoir être déplacés les uns par rapport aux autres, la structure porteuse comportant des moyens de blocage en position des différents tronçons entre eux.

3. Dispositif selon la revendication 2, dans lequel les tronçons (12, 13, 14) sont conformés de sorte à pouvoir être maintenus bloqués les uns par rapport aux autres par les moyens de blocage selon trois positions relatives différentes permettant de définir trois tailles distinctes de structure porteuse.

4. Dispositif selon la revendication 2 ou 3, dans lequel les moyens de blocage comportent au moins une mollette de serrage (17, 18) venant d'une part s'insérer dans un orifice d'accroche d'un premier tronçon agencé à l'intérieur d'un deuxième tronçon et d'autre part reposer de part et d'autre d'une rainure (16) du deuxième tronçon donnant accès à l'orifice d'accroche pour solidariser le premier tronçon au deuxième tronçon.

5. Dispositif selon l'une des revendications précédentes, dans lequel l'orifice de fixation (22) comporte une première portion (23) traversant entièrement le mât et une deuxième portion (24) connectée à la première portion et seulement présente au niveau d'une face longitudinale externe du mât, la deuxième portion débouchant ainsi dans la rainure (19) mais ne traversant pas tout le mât, et dans laquelle l'organe de fixation (27) comporte une tige d'accroche (28) insérée dans l'orifice de fixation au niveau de sa première portion et une partie d'arrêt (29) insérée dans l'orifice de fixation au niveau de sa deuxième portion, la partie d'arrêt étant conformée grossièrement en L dont une aile est venue de matière avec la tige d'accroche et une autre aile s'étend sensiblement parallèlement à la tige d'accroche, la jonction interne entre les deux ailes étant incurvée pour former un logement de réception (30) du pion de serrage (25).

6. Table (1) comportant un dispositif d'accrochage selon l'une des revendications précédentes.

7. Cloison ou ensemble mural comportant un dispositif d'accrochage selon l'une des revendications 1 à 5.

8. Kit pour le montage d'un dispositif d'accrochage selon l'une des revendications 1 à 5, comportant de façon séparée l'organe d'attache et l'organe de fixation (27).

9. Procédé de montage d'un dispositif d'accroche selon l'une des revendications 1 à 5, comportant les étapes de :
- agencer le panneau (3, 4, 5) sur la structure porteuse (2) de sorte que le pion de serrage (25) se trouve inséré dans le logement de positionnement,
- déplacer le panneau selon la première direction (X) pour agencer le pion de serrage dans la partie non élargie (21) de la rainure (19), et
- rapporter l'organe de fixation (27) dans l'orifice (22) pour bloquer en position le pion de serrage dans la rainure au niveau de la partie non élargie de la rainure.
